# EUROPEAN PATENT APPLICATION

(11) **EP 0 539 127 A1**
(43) Date of publication of application: **28.04.1993**
(21) Application number: 92309498.1
(22) Date of filing: 16.10.1992
(51) Int. Cl.: B60R 25/02

(54) **Steering apparatus for use in preventing theft of a vehicle**

(30) Priority: 22.10.1991 GB 9122342
(71) Applicant: Chitolie, Dick Lucien, Sunbury on Thames, Middlesex TW15 7SR (GB)
(72) Inventor: Chitolie, Dick Lucien, Sunbury on Thames, Middlesex TW15 7SR (GB)
(74) Representative: Jones, Graham H.

(57) **Abstract**

Steering apparatus (2) for use in preventing theft of a vehicle, which steering apparatus (2) comprises a steering wheel (4), a steering column (6), connecting means (8) by which the steering wheel (4) is a slideable releaseable fit on the steering column (6), and locking means (10) for locking the steering wheel (4) in position during use of the vehicle and for unlocking the steering wheel (4) when the vehicle is parked whereby the steering wheel (4) can be removed from the steering column (6) in order to prevent theft of the vehicle, the connecting means (8) being such that it comprises a splined arrangement (12) having at least one security formation (14) for ensuring that the steering wheel only fits on its intended steering column (6) thereby to hinder thieves attempting to steel the vehicle with another steering wheel, and the locking means (10) being such that it operates on the connecting means (8) to prevent the steering wheel (4) being pulled off the steering column (6) via the splined arrangement when the locking means (10) is in its locked condition.

## Description

This invention relates to steering apparatus for use in preventing theft of a vehicle.

Many vehicles are stolen each year. There are many different types of devices for helping to prevent the theft of vehicles, including electronic alarms and mechanical locks. The ingenuity of people installing the known electronic alarms and mechanical locks has been matched by the ingenuity of thieves in circumventing the electronic alarms and the mechanical locks, and so the theft of vehicles continues and has reached alarming proportions.

It is an aim of the present invention to reduce the above mentioned problem.

Accordingly, the present invention provides steering apparatus for use in preventing theft of a vehicle, which steering apparatus comprises a steering wheel, a steering column, connecting means by which the steering wheel is a slideable releaseable fit on the steering column, and locking means for locking the steering wheel in position during use of the vehicle and for unlocking the steering wheel when the vehicle is parked whereby the steering wheel can be removed from the steering column in order to prevent theft of the vehicle, the correcting means being such that it comprises a splined arrangement having at least one security formation for ensuring that the steering wheel only fits on its intended steering column thereby to hinder thieves attempting to steal the vehicle with another steering wheel, and the locking means being such that it operates on the connecting means to prevent the steering wheel being pulled off the steering column via the splined arrangement when the locking means is in its locked condition.

The steering apparatus of the present invention is thus of considerable use in preventing theft of a vehicle in that it is not possible to drive the vehicle away without a steering wheel. Even if a thief is able to circumvent electronic alarms and/or mechanical locks, the thief is still helpless without the steering wheel. Furthermore, because the fact that the steering wheel has been removed can easily be seen by a potential thief looking into a car, the thief will be deterred prior to breaking into the car and thus potential damage done by the thief can be avoided.

The steering apparatus may be one in which the connecting means comprises a fixed bush having a splined outer surface and a bore of a shape for fitting to the steering column, a nut for fitting the fixed bush to the steering column, and a removable bush having a splined bore for fitting over the splined outer surface of the fixed bush, the splined outer surface of the fixed bush and the splined bore of the removable bush being such as to form the splined arrangement.

Advantageously, the fixed bush and the removable bush have mating inclined surfaces for giving a friction fit between the fixed bush and the removable bush. This helps to ensure that the steering wheel is a firm fit on the steering column.

The steering apparatus may be one in which the removable bush is a removable fit in the steering wheel. Such an arrangement is advantageous in that, when the vehicle has been parked, a driver can place the steering wheel in the boot of a car. In order to avoid the possibility of a thief breaking into the boot of the car and stealing the steering wheel, the removable bush can simply be removed from the steering wheel and can be taken away by the driver, for example in the driver's pocket or handbag. Thus, even if a thief should break into the boot and obtain the steering wheel, the thief will not be able to fit the steering wheel to the steering column because the removable bush will not be present. Such a simple arrangement avoids a vehicle driver having to worry about leaving the steering wheel in the boot of the car, and it also avoids the driver having to carry the steering wheel if the driver is not prepared to leave his steering wheel in the boot of the car.

Usually, the bore of the fixed bush will be a splined bore for fitting over a splined portion of the steering column. The majority of steering columns in vehicles have splined end portions. Some vehicles do however have steering columns with nut-shaped end portions and, in this case, the bore of the fixed bush could have flat sides for fitting over the nut-shaped end portion of the steering column. Generally, the bore of the fixed bush can be of any complementary shape for fitting over the end portion of the steering column in order to enable the steering apparatus of the present invention to be fitted to existing vehicles with existing steering columns. For new vehicles, the steering column could be formed to receive the fixed bush or it could be formed to dispense with the fixed bush.

Preferably, the steering apparatus is such that the security formation is a keyway. Preferably, there are three of the keyways. More or less than three keyways may be employed. Other types of security formation may also be employed.

The steering apparatus may be one in which the locking means comprises a retaining pin which locates in an aperture in the side of the connecting means in the locked condition of the locking means, and a hand-operated control member controlling the movement of the pin in and out of the aperture in the side of the connecting means. Preferably, the hand-operated control member comprises a spring biased push button. The push button is preferably located on the steering wheel but it may be located at other positions if desired. Also, if desired, other types of hand-operated control members may be employed such for example as a pull member.

The steering apparatus may include a recess for receiving at least a part of a first microswitch and a flat portion for engaging with a second microswitch, the first and the second microswitches being such that they prevent starting of an engine of the vehicle, the first microswitch being constructed such that it will only operate to allow starting of the engine if it is in a non-depressed condition in the recess, and the second microswitch being such that it will only operate to allow starting of the engine if it is in a depressed condition, the recess and the flat portion thus being such as to combine with the first and the second microswitches to prevent theft of the vehicle by a thief using other steering apparatus without the recess and the flat portion.

Preferably, the recess is a circular groove. Other types of recess may however be employed.

An embodiment of the invention will now be described solely by way of example and with reference to the accompanying drawings in which:

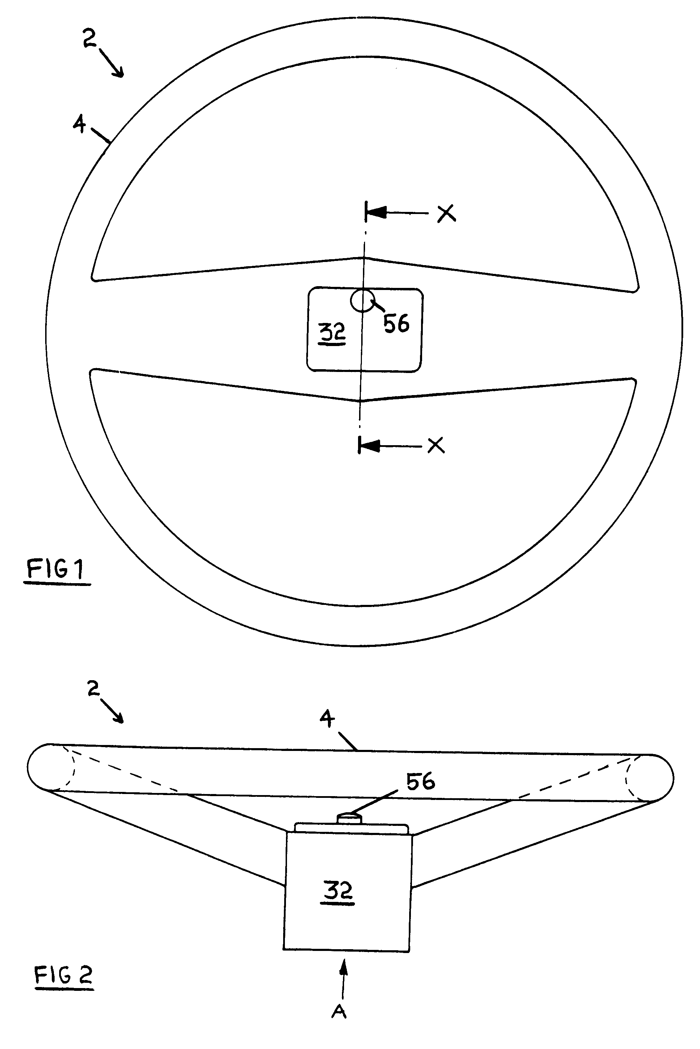

Figure 1 is a plan view of steering wheel apparatus for use in preventing theft of a vehicle;
Figure 2 is a side view of the apparatus as shown in Figure 1;
Figure 3 is a section of the central part of the apparatus on the line X-X shown in Figure 1; and
Figure 4 is a view of arrow A shown in Figure 2.

Referring to the drawings, there is shown steering apparatus 2 for use in preventing theft of a vehicle. The steering apparatus 2 comprises a steering wheel 4, a steering column 6, and connecting means 8 by which the steering column 4 is a slideable release fit on the steering column 6. The steering apparatus 2 further comprises locking means 10 for locking the steering wheel 4 in position during use of the vehicle and for unlocking the steering wheel 4 when the vehicle is parked whereby the steering wheel 4 can be removed from the steering column 6 in order to prevent theft of the vehicle.

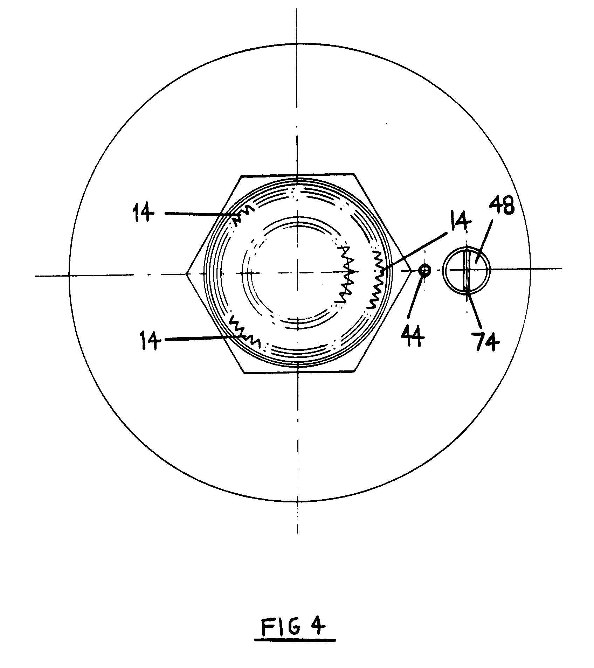

The connecting means 8 is such that it comprises a splined arrangement 12 having at least one security formation 14 (see Figure 4) for ensuring that the steering wheel 4 only fits on its intended steering column 6, thereby to hinder thieves attempting to steal the vehicle with another steering wheel 4. The locking means 10 is such that it operates on the connecting means 8 to prevent the steering wheel 4 being pulled off the steering column 6 via the splined arrangement 12 when the locking means 10 is in its locked condition.

The connecting means 8 comprises a fixed bush 16 having a splined outer surface 18 and a bore 20 of a shape for fitting to the steering column 6. The connecting means 8 also comprises a nut 22 for fixing the fixed bush 16 to the steering column 6. The nut 22 can be permanently fixed in position by super glue or other fixing means. The connecting means 8 further comprises a removable bush 24 having a splined bore 26 for fitting over the splined outer surface 18 of the fixed bush 16. The splined outer surface 18 of the fixed bush 16 and the splined bore 26 of the removable bush 24 are such as to form the splined arrangement 12.

The fixed bush 16 and the removable bush 24 have mating inclined surfaces 28, 30 respectively. These mating inclined surfaces 28, 30 ensure a tight fit between the fixed bush 16 and the removable bush 24 when the removable bush 24 is slid over the fixed bush 16. This in turn helps to make sure that the steering wheel 4 feels a positive and firm fit on the steering column 6.

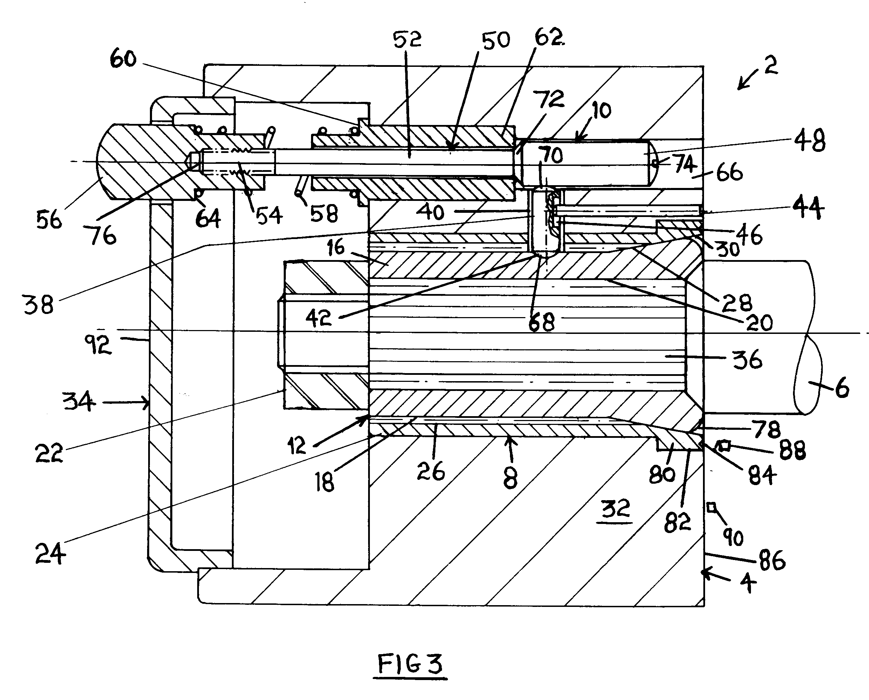

The removable bush 24 is a removable fit in a central portion 32 of the steering wheel 4. The removable bush 24 may be a removable fit in the central portion 32 of the steering wheel 4 by simply being removable by pulling by hand. Preferably however the steering wheel 4 will be provided with ejector means for ejecting the removable bush. The ejector means may be a push button ejector means. Such a push button ejector means may operate longitudinally at position 34 shown in Figure 3. In such a position, the push button ejector means can push directly on the end of the removable bush 22 to force it out of the central portion 32 of the steering wheel 4.

The bore 20 of the fixed bush 16 is a splined bore 20 which fits over a spined end portion 36 of the steering column 6.

As can be seen from Figure 4, there are three of the security formations 14 and each security formation 14 is in the form of a keyway. The use of three such security formations 14 enables many security combinations to be achieved simply by altering the position of one or more of the security formations 14 for different steering apparatus for different vehicles.

As can be seen most clearly from Figure 3, the locking means 10 comprises a retaining pin 38 which locates in an aperture 40 in a side of the correcting means 8. More specifically, the aperture 40 passes through the removable bush 22 and into a recess 42 in the fixed bush 16. Figure 3 shows the locked condition of the locking means 10 and it will be apparent that the retaining pin 38 stops the steering wheel 4 and its removable bush 24 from being pulled off the fixed bush 16 via the splined arrangement 12.

The retaining pin 38 moves backwards and forwards and it is held in position by a locating pin 44 which operates in a recess 46 formed in the retaining pin 38. In the locking position of the retaining pin 38, the retaining pin 38 is held in its position by an enlarged diameter end 48 of a control push rod 50. The push rod 50 has a reduced diameter shank 52 and a screw threaded end portion 54. A push button 56 screws to the end portion 52. One end of a spring 58 sits on a shoulder 60 of a guide bush 62. The other end of the spring 58 sits on a shoulder 64 formed on the push button 56. The spring 58 thus biases the push button 56 to an outward position in which it is ready to be depressed to cause an unlocking movement of the locking means 10. More specifically, when the push button 56 is depressed, the end 48 moves further to the right as shown in Figure 3 in a bore 66 and then the shank 52 becomes positioned adjacent the retaining pin 38. Because the shank 52 is of a reduced diameter as compared with the end 48, the retaining pin 38 is able to move into the space created by the reduced diameter shank 52 and thus the retaining pin 38 is able to move out of the recess 42 and the aperture 40. The retaining pin 38 moves out of the recess 42 and the aperture 40 due to the fact that it has a rounded end 68 which easily slides out of the recess 42 and out of the aperture 40 as the steering wheel 4 and the removable bush 24 are pulled longitudinally off the splined arrangement. The retaining pin 38 has a rounded end 70 which gets pushed by the inclined shoulder portion 72 and the end 48 back into the aperture 40 and the recess 42 when pressure on the button 56 is released and the spring 58 moves the end 48 and the shank 52 to the left as shown in Figure 3. The end 48 is provided with a slot 74 for receiving a screw driver for enabling the end portion 54 of the shank 52 to be screwed into a screw threaded bore 76 in the push button 56.

The fixed bush 16 has a rounded end 78. This is to deter theft attempts involving removing the nut 22 and then trying to remove the fixed bush 16 with pulling equipment. The pulling equipment will have difficulty in securely engaging with the rounded end 78.

As can be seen from Figures 3 and 4, the removable bush 24 has a hexagonal end portion 80 for fitting in a complementary hexagonal recess 82 in the central portion 32 of the steering wheel 4. The end portion 80 thus provides a means for helping to stop the removable bush 24 rotating with respect to the steering wheel 4 during use of the steering wheel 4 in steering the vehicle.

As can be seen from Figure 3, the end portion 80 is provided with a recess in the form of a circular groove 84. This groove 84 is for receiving a first microswitch. The central portion 32 of the steering wheel 4 has a flat portion 86 which is for engaging with a second microswitch. The first microswitch is shown schematically as microswitch 88 and the second microswitch is shown schematically as microswitch 90. The first microswitch 88 is constructed such that it will only operate to allow starting of an engine of the vehicle if the microswitch 88 is in a non-depressed condition in the groove 84. The second microswitch 90 is such that it will only operate to allow starting of the engine if the second microswitch 90 is in a depressed condition, having been depressed by the flat portion 86. Thus the groove 84 and the flat portion 86 combine with the first and the second microswitches 88,90 to prevent theft of the vehicle by a thief using other steering apparatus but without the groove 84 and the flat portion 86.

It is to be appreciated that the embodiment of the invention described above with reference to the accompanying drawings has been given by way of example only and that modifications may be effected. Thus, for example, the removable bush 24 could be arranged to be a permanent fit in the central portion 32 of the steering wheel 4. Where ejector means are employed to eject the removable bush 24 from the central portion 32, then the ejector means may be a push button rod arrangement similar to the push button 56 and the shank 52, operating at the position 34. The steering columns 6 of some vehicles have hexagonal end portions 36 instead of splined end portions 36. In this case, the bore 20 of the fixed bush 16 would be appropriately shaped to fit over the hexagonal or other shaped end portion 36 of the steering column 6.

The push button 56 may be arranged to extend proud of the surface 92 of the steering wheel 4 or, alternatively, the push button 56 may be a flush fit with the surface 92. Other types of locking means 10 may be employed so that, for example, instead of operating on a pushing action as illustrated, the locking means 10 could operate on a pulling action. Where various parts of the invention slide over one another, inclined surfaces may be employed to give a positive tight fit when the parts have been slid completely together. More or less than three security formations 14 may be employed and the shape of the security formations 14 may be other than as shown. Various bush parts and spline parts of the steering apparatus 2 are preferably made of hardened stainless steel but other suitable and appropriate materials may be employed.

## Claims

1. Steering apparatus for use in preventing theft of a vehicle, which steering apparatus comprises a steering wheel, a steering column, connecting means by which the steering wheel is a slideable releaseable fit on the steering column, and locking means for locking the steering wheel in position during use of the vehicle and for unlocking the steering wheel when the vehicle is parked whereby the steering wheel can be removed from the steering column in order to prevent theft of the vehicle, the connecting means being such that it comprises a splined arrangement having at least one security formation for ensuring the steering wheel only fits on its intended steering column thereby to hinder thieves attempting to steal the vehicle with another steering wheel, and the locking means being such that it operates on the connecting means to prevent the steering wheel being pulled off the steering column via the splined arrangement when the locking means is in its locked condition.

2. Steering apparatus according to claim 1 in which the correcting means comprises a fixed bush having a splined outer surface and a bore of a shape for fitting to the steering column, a nut for fixing the fixed bush to the steering column, and a removable bush having a splined bore for fitting over the splined outer surface of the fixed bush, the splined outer surface of the fixed bush and the splined bore of the removable bush being such as to form the splined arrangement.

3. Steering apparatus according to claim 2 in which the fixed bush and the removable bush have mating inclined surfaces for giving a tight fit between the fixed bush and the removable bush.

4. Steering apparatus according to claim 2 in which the removable bush is a removable fit in the steering wheel.

5. Steering apparatus according to any one of claims 2 to 4 in which the bore of the fixed bush is a splined bore for fitting over a splined end portion of the steering column.

6. Steering apparatus according to any one of the preceding claims in which the security formation is a keyway.

7. Steering apparatus according to any one of the preceding claims in which the locking means comprises a retaining pin which locates in an aperture in a side of the connecting means in the locked condition of the locking means, and a hand-operated control member for controlling the movement of the pin in and out of the aperture in the side of the correcting means.

8. Steering apparatus according to claim 7 in which the hand-operated control member comprises a spring biased push button.

9. Steering apparatus according to claim 8 in which the push button is located on the steering wheel.

10. Steering apparatus according to any one of the preceding claims and including a recess for receiving at least a part of a first microswitch, and a flat portion for engaging with a second microswitch, the first and the second microswitches being such that they prevent starting of the engine, the first microswitch being constructed such that it will only operate to allow starting of the engine if it is in a non-depressed condition in the recess, and the second microswitch being such that it will only operate to allow starting of the engine if it is in a depressed condition, the recess and the flat portion thus being such as to combine with the first and the second microswitches to prevent theft of the vehicle by a thief using other steering apparatus without the recess and the flat portion.
